# EUROPÄISCHE PATENTSCHRIFT

(11) **EP 2 627 466 B1**
(45) Veröffentlichungstag und Bekanntmachung des Hinweises auf die Patenterteilung: **20.04.2016**
(21) Anmeldenummer: 11734089.3
(22) Anmeldetag: 19.07.2011
(51) Int. Cl.: B22D 13/10, B22D 19/02, B22D 19/14, B22D 13/04, B22F 5/02, C21D 9/40, C21D 1/25, C21C 1/02, C22C 1/10, C22C 37/06, C22C 37/08, C22C 37/10, C21D 1/18, C22C 1/02, F16J 9/26

(54) **VERFAHREN ZUR HERSTELLUNG EINES KOLBENRINGS MIT EINGELAGERTEN PARTIKELN**
METHOD FOR PRODUCING A PISTON RING HAVING EMBEDDED PARTICLES
PROCÉDÉ DE PRODUCTION D'UN SEGMENT DE PISTON POURVU DE PARTICULES INCORPORÉES

(30) Priorität: 13.10.2010 DE 102010042402
(43) Veröffentlichungstag der Anmeldung: 21.08.2013
(73) Patentinhaber: Federal-Mogul Burscheid GmbH, 51399 Burscheid (DE)
(72) Erfinder: MITTLER, Richard, 42799 Leichlingen (DE); PELSOECZY, Laszlo, 51399 Burscheid (DE)
(74) Vertreter: Becker Kurig Straus
(86) Internationale Anmeldenummer: PCT/EP2011/062351
(87) Internationale Veröffentlichungsnummer: WO 2012/048919

(56) Entgegenhaltungen:
- EP-A1- 0 335 012
- EP-A1- 0 821 073
- WO-A1-2010/097103
- WO-A1-2010/097107
- WO-A1-2010/108528
- DE-T2- 69 422 954
- JP-A- 57 118 849
- JP-A- 58 006 768
- JP-A- 58 119 455
- JP-A- 58 215 260
- JP-A- 59 033 065
- JP-A- 59 082 153
- US-A- 2 681 260
- Anonymous: "Thin Film Evaporation Guide", Vacuum Engineering &Materials Co., Inc. , 2008, XP002662416, Gefunden im Internet: URL:http://www.vacengmat.com/downloads/VEM _Thin_Film_Evaporation_Guide.pdf [gefunden am 2011-10-28]
- V.G. Asmolov et al: "CHOICE OF BUFFER MATERIAL FOR THECONTAINMENT TRAP FOR VVÉR-1000 CORE MELT", Atomic Energy, Bd. 92, Nr. 1 Januar 2002 (2002-01), Seiten 5-14, XP002662408, DOI: 10.1023/A:1015094327731 Gefunden im Internet: URL:http://www.springerlink.com/content/91 ktlb5nnq4eqj35/fulltext.pdf [gefunden am 2011-10-28]

## Beschreibung

Die vorliegende Erfindung betrifft ein Verfahren zur Herstellung eines Kolbenrings in welchen Partikeln zur Vermeidung des Flankenverschleißes eingelagert sind. Weiterhin betrifft die vorliegende Erfindung einen Kolbenring, der mit dem erfindungsgemäßen Verfahren hergestellt wurde.

### Stand der Technik

Kolbenringe dichten in einem Verbrennungskraftmotor den zwischen Kolbenkopf und Zylinderwand vorhandenen Spalt gegenüber dem Brennraum ab. Bei der Auf- und Abbewegung des Kolbens gleitet der Kolbenring einerseits mit seiner äußeren Umfangsfläche in ständiger federnder Anlage gegen die Zylinderwand, andererseits gleitet der Kolbenring, bedingt durch die Kippbewegungen des Kolbens, oszillierend in seiner Kolbenringnut, wobei seine Flanken wechselnd an der oberen oder unteren Nutenflanke der Kolbenringnut anliegen. Bei den jeweils gegeneinander laufenden Gleitpartnern tritt in Abhängigkeit des Materials ein mehr oder weniger starker Verschleiß auf, der bei einem Trockenlauf zu so genannten Fressern, Riefenbildung und schließlich zu einer Zerstörung des Motors führen kann. Um das Gleit- und Verschleißverhalten von Kolbenringen gegenüber der Zylinderwand zu verbessern, wurden diese an deren Umfangsfläche mit Beschichtungen aus unterschiedlichen Materialien versehen.

Im dynamischen Motorbetrieb sind Kolbenringe aufgrund von Gas-, Reibungs- und Massenkräften einer axialen Bewegung in der Kolbennut ausgesetzt. Sie unterliegen durch ihren ständigen Eingriff an der Zylinderlaufbahn einem ständigen Gleitverschleiß. Dieser äußert sich sowohl in abrasivem Abrieb der Kolbenringoberfläche oder seiner Beschichtung als auch teilweisem Übertrag von Material von der Zylinderlauffläche auf die Kolbenringlauffläche und umgekehrt. Hierbei kommt es zu einem abrasiven Verschleiß an den Kolbenringflanken, die das Funktionsverhalten des Kolbenrings stark beeinflussen. Dieser Flankenverschleiß hat einen direkten Einfluss auf das Emissionsverhalten des Motors.

Zur Herstellung von Kolbenringen werden meist Gusseisenwerkstoffe bzw. Gusseisenlegierungen verwendet. Kolbenringe, insbesondere Kompressionsringe, unterliegen in hochbeanspruchten Motoren einer zunehmenden Belastung, unter anderem Kompressionsspitzendruck, Verbrennungstemperatur, EGR und Schmierfilmreduzierung, die deren Funktionseigenschaften, wie Verschleiß, Brandspurbeständigkeit, Microwelding und Korrosionsbeständigkeit, maßgeblich beeinflussen. Gusseisenwerkstoffe gemäß dem Stand der Technik weisen jedoch ein hohes Bruchrisiko auf, so dass es bei der Verwendung bisheriger Werkstoffe häufig zu Ringbrüchen kommt. Gestiegene mechanisch-dynamische Belastungen führen zu kürzeren Lebensdauern von Kolbenringen. Ebenso kommt es zu starkem Verschleiß und Korrosion an Lauffläche und Flanke. Aufgrund der höheren mechanischen und dynamischen Beanspruchungen von Kolbenringen fordern immer mehr Motorenhersteller Kolbenringe und Zylinderlaufbuchsen aus hochwertigem Stahl. Hierbei bezeichnet man Eisenwerkstoffe mit weniger als 2,08 Gew.-% Kohlenstoff als Stahl. Liegt der Kohlenstoffgehalt höher, so redet man von Gusseisen. Stahlwerkstoff besitzen gegenüber Gusseisen bessere Festigkeits- und Zähigkeitseigenschaften, da keine Störung durch freien Graphit im Grundgefüge vorhanden ist.

Heutige Kolbenringwerkstoffe auf Basis von Gusseisen oder Stahl stellen einen homogenen Werkstoff dar, welcher selbst nicht hinreichend beständig gegenüber Flankenverschleiß ist. Um den Flankenverschleiß der Kolbenringe im Motor zu verringern, werden Verschleißschutzschichten auf den Kolbenringflanken aufgebracht. Kolbenringe mit partikelverstärkten Hartchrombeschichtungen zeigen beispielsweise eine deutlich bessere Abriebfestigkeit als unbeschichtete oder nitrierte Ringe, aber auch als Kolbenringe mit konventionellen Hantchromschichten sowie Plasmaspritzschichten auf Molybdän-Basis. Dennoch sind auch diese Beschichtungen aufgrund der steigenden Druck- und Temperaturparameter in modernen Verbrennungsmotoren in den Grenzbereich ihrer Leistungsfähigkeit geraten. Daher wurden neue Beschichtungen erforderlich, die über noch geringeren Abrieb und höhere Adhäsionsfestigkeit gegenüber den bisher existierenden verfügten. Um diese Anforderung zu erfüllen, wurden mittels thermischen Spritzens Verbundpulver auf Kolbenringoberflächen aufgetragen, welche in einer metallischen Matrix eine keramische Phase enthalten. Auf diese Weise ist es möglich, die guten tribologischen Eigenschaften von Keramik mit den guten mechanischen Eigenschaften von Metallen zu verbinden. In der metallischen Matrix ist eine duktile und zähe Bindung der harten und teilweise spröden Keramikpartikel gewährleistet. Die Keramikpartikel können dann bei geeigneter Freilegung an der Oberfläche des Kolbenrings die tribologischen Aufgaben übernehmen, während die Metallmatrix die mechanischen Lasten aufnimmt und gegebenenfalls Spannungen über Verformungen abbaut.

Die Herstellung derart beschichteter Kolbenringe ist allerdings aufwendig, da sich an die Herstellung des Kolbenrings noch ein Beschichtungsschritt anschließen muss. Es ist daher Aufgabe der vorliegenden Erfindung, ein Verfahren herzustellen, um Kolbenringe bereitzustellen, die an ihren Flanken mit Keramikpartikeln versehen sind, ohne dass zum Einbringen dieser Keramikpartikel ein Beschichtungsschritt notwendig wäre.

Aus der Druckschrift US 2,681,260 A ist ein Verfahren zur Herstellung von Zylindern und Zylinderlaufbuchsen mit einer harten Innenlauffläche mit Karbiden bekannt. Karbidteilchen werden einer eisenhaltigen Schmelze hinzugefügt und der Zylinder bzw. die Zylinderlaufbuchse wird mittels Zentrifugalguss geformt, so dass sich die Karbidteilchen aufgrund ihrer geringeren Dichte an der Innenseite konzentrieren.

### Beschreibung der Erfindung

Diese Aufgabe wird erfindungsgemäß durch ein Verfahren zur Herstellung eines Kolbenrings gelöst, welches die folgenden Schritte umfasst:
a. Herstellen einer Schmelze der Ausgangsmaterialien eines Metallwerkstoffes,
b. Zugeben von Keramikpartikeln zu der Schmelze, wobei die Keramikpartikel eine Dichte von < 4,0 g/cm³ aufweisen,
c. Abgießen der Schmelze in eine vorgefertigte Form, wobei die Form lediglich das Gießen eines Ringes zulässt, und
d. Abkühlen der Schmelze, wobei ein Zeitraum von ≥ 120 Sekunden bis zum Erreichen der Liquidus-Temperatur verstreicht, und wobei die Form horizontal ausgerichtet ist, so dass sich die Keramikpartikel während des Abkühlens an mindestens einer der Kolbenringflanken sammeln.

Die Keramikpartikel können beispielsweise unter Rühren in die Metallschmelze eingebracht werden.

Um die Ansammlung der Keramikpartikel an den gewünschten Flanken zu erreichen, wird die Tatsache genutzt, dass die Keramikpartikel und die Metallschmelze eine unterschiedliche Dichte aufweisen. Von Bedeutung hierbei ist, dass die Dichte der Keramikpartikel geringer als jene der Metallschmelze ist. So sollte die Dichte der Keramikpartikel < 4,0 g/cm³ betragen. Bevorzugt ist eine Dichte der Keramikpartikel in einem Bereich von 1,0 bis < 4,0 g/cm³, mehr bevorzugt ist eine Dichte der Keramikpartikel in einem Bereich von 1.8 bis < 3,0 g/cm³, mehr bevorzugt ist eine Dichte der Keramikpartikel in einem Bereich von 2,1 bis < 2,8 g/cm³. Am Besten ist eine Dichte der Keramikpartikel in einem Bereich von 2,1 bis < 2,6 g/cm³ geeignet. Die Dichte der Keramikpartikel kann über das Herstellungsverfahren auf eine dem Fachmann bekannte Weise beeinflusst, bzw. eingestellt werden.

Ferner lässt es die Form lediglich zu, einen Ring zu gießen. Durch das Einzelgussverfahren tritt beim Abkühlen der Ringe eine Verfestigung des Materials von Außen nach Innen statt.

Um die Ansammlung der Keramikpartikel an den gewünschten Flanken sicherzustellen, ist die Form horizontal angeordnet, um eine Trennung mittels Erdanziehungskraft zu ermöglichen. Eine teilweise Trennung des Metallgusswerkstoffs von den Keramikpartikeln kann alternativ durch den Einsatz einer Zentrifuge beschleunigt werden, wobei die Normale der Ebene, die durch die Gussform festgelegt ist, in der Zentrifugenebene liegt. Mit anderen Worten, liegt die Form parallel zur Rotationsachse der Zentrifuge vor, so dass sich die Keramikpartikel in Richtung der Rotationsachse ansammeln. Es wurde gefunden, dass vor allem durch die Trennung mittels Erdanziehungskraft eine vorteilhafte Verteilung der Keramikpartikel im Metallgusswerkstoff erzielt werden kann.

Um eine ausreichende Ansammlung der Keramikpartikel mittels Erdanziehungskraft sicherzustellen, sollte ein Zeitraum von ≥ 120 Sekunden bis zum Erreichen der Liquidus-Temperatur verstreichen. Vorzugsweise, beträgt der Zeitrum bis zum Erreichen der Liquidus-Temperatur ≥ 180 Sekunden, mehr bevorzugt zwischen 180 und 300 Sekunden. Am meisten bevorzugt ist ein Zeitraum zwischen 180 und 210 Sekunden.

Um die gewünschte Abkühlungsgeschwindigkeit einzuhalten, kann beispielsweise Wärme von Außen zugeführt werden. Es kann sich also um eine beheizbare Form handeln. Alternativ können in die Schmelze exotherme Zusatzstoffe gegeben werden. Eine weitere Möglichkeit besteht in der Wahl eines bestimmten Verhältnisses von Volumen zur Oberfläche des Kolbenringrohlings von V/O = > 0,5 cm.

Die Keramikpartikel werden bevorzugt ausgewählt aus der Gruppe bestehend aus Partikeln von Al₂O₃, Cr₂O₃, Fe₃O₄, TiO₂, ZrO₂, und Mischungen daraus ausgewählt.

Um einerseits die Ansammlung der Keramikpartikel an der gewünschten Kolbenringflanke zu erleichtern und andererseits gute tribologische Eigenschaften des Kolbenrings zu gewährleisten, wird der mittleren Durchmesser der Keramikpartikel in abhängigkeit von Querschnitt des Kolbenringes gewählt. Die Keramikpartikel können einen mittleren Durchmesser im Bereich von 0,1 bis 100 µm aufweisen. Bevorzugt weisen die Keramikpartikel einen mittleren Durchmesser im Bereich von 0,5 bis 80 µm auf, mehr bevorzugt ist ein mittlerer Durchmesser im Bereich von 0,5 bis 40 µm, mehr bevorzugt ist ein mittlerer Durchmesser im Bereich von 1,0 bis 25 µm, mehr bevorzugt ist ein mittlerer Durchmesser im Bereich von 5,0 bis 25 µm. Am meisten bevorzugt ist ein mittlerer Durchmesser im Bereich von 5,0 bis 15 µm.

Bevorzugt handelt es sich bei dem Metallgusswerkstoff um Gusseisen oder einen Stahlgusswerkstoff, wie V4 Stahl. Geeignete Materialen für Kolbenringe, sowie deren Herstellung, wie beispielsweise Pressen von Stahl, ist dem Fachmann bekannt.

Wenn es sich bei dem Metallgusswerkstoff um Gusseisen handelt, enthält dieses bevorzugt die folgenden Elemente im angegebenen Anteil bezogen auf 100 Gew.-% der Gusseisenzusammensetzung: C, 2,0 - 3,8 Gew.-%; Si und oder Al, 1,0 - 4,0 Gew.-%; Mn, 0,05-1,5 Gew.-%; P, 0 - 0,7 Gew.-%: S, 0 - 0.1 Gew.-%; Cr, 0,05 - 1,5 Gew.-%; Cu, 0,05 - 2,5 Gew.-%; Sn, 0 - 2,5 Gew.-%; N, 0 - 0,08 Gew.-%, Rest Fe.

Der Metallgusswerkstoff enthält bevorzugt die folgenden Elemente im angegebenen Anteil bezogen auf 100 Gew.-% der Stahlwerkstoffzusammensetzung: C, 2,00 - 4,00 Gew.-%; Si, bis zu 0,10 Gew.-%; P, bis zu 0,10 Gew.-%; S, bis zu 0,20 Gew.-%; Mn, bis zu 1.30% Gew.-%; Cu, bis zu 0,50 Gew.-%; Cr, 1,7 bis 5,00 Gew.-%; Ni und Lanthaniden, 0,10 - 2,00 Gew.-%; Mo, 0,1% bis 2,0 Gew.-%; Co, bis zu 0.20 Gew.-%, und mindestens ein Element ausgewählt aus der Gruppe bestehend aus Ti, V, und Nb in der Summe bis zu 1,5 Gew.-%), Rest Fe.

Gegebenenfalls kann der Kolbenring anschließend vergütet werden. Dies erfolgt durch die folgenden Schritte:
e. Austenitisieren des Kolbenrings oberhalb seiner Ac3-Temperatur,
f. Abschrecken des Kolbenrings in einem geeigneten Abschreckmedium, und
g. Anlassen des Kolbenrings bei einer Temperatur im Bereich von 400 bis 700°C in einem Schutzgasofen.

Als Abschreckmedium wird bevorzugt Öl verwendet.

Ferner kann eine abriebfeste Beschichtung aus einem dem Fachmann bekannten Material auf Ringlauffläche und/oder Ringflanke des Kolbenrings vorliegen. Das Aufbringen einer derartigen Schicht kann durch eine Reihe im Stand der Technik bekannter Verfahren erfolgen. So kann die Schicht beispielsweise durch ein thermisches Beschichtungsverfahren, wie beispielsweise Plasmaspritzen, Lichtbogendrahtspritzen, Kaltggasspritzen , Drahtflammspritzen und HVOF Beschichten aufgebracht werde. Alternativ kann die Schicht mittels Galvanisieren, PVD, CVD, Lackieren und Nitrieren abgeschieden werden. Ebenfalls können auch Kombinationen der Verfahren eingesetzt werden.

## Patentansprüche

1. Verfahren zur Herstellung eines Kolbenrings, umfassend die folgenden Schritte:
a. Herstellen einer Schmelze der Ausgangsmaterialien eines Gusseisen- oder Stahlgusswerkstoffes;
b. Zugeben von Keramikpartikeln zu der Schmelze, wobei die Keramikpartikel eine geringere Dichte als die Schmelze aufweisen; und
c. Abgießen der Schmelze in eine vorgefertigte Form, wobei die Form lediglich das Gießen eines Ringes zulässt;
**gekennzeichnet durch**
d. Abkühlen der Schmelze, wobei eine Abkühlungsgeschwindigkeit eingehalten wird, so dass ein Zeitraum von ≥ 120 Sekunden bis zum Erreichen der Liquidus-Temperatur verstreicht, und wobei die Form horizontal ausgerichtet ist, um eine Trennung mittels Erdanziehungskraft zu ermöglichen, so dass sich die Keramikpartikel während des Abkühlens an mindestens einer der Kolbenringflanken sammeln.

2. Verfahren gemäß Anspruch 1, **dadurch gekennzeichnet, dass** die Keramikpartikel eine Dichte von < 4,0 g/cm³ aufweisen.

3. Verfahren gemäß einem der Ansprüche 1 oder 2, **dadurch gekennzeichnet, dass** die Keramikpartikel ausgewählt sind aus der Gruppe bestehend aus Partikeln von Al₂O₃, Cr₂O₃, Fe₃O₄, TiO₂ ZrO₂, und Mischungen daraus.

4. Verfahren gemäß einem der Ansprüche 1 bis 3, **dadurch gekennzeichnet, dass** die Keramikpartikel einen mittleren Durchmesser von 0,1 bis 100 µm aufweisen.

5. Verfahren gemäß einem der Ansprüche 1 bis 4, weiterhin umfassend die folgenden Schritte:
e. Austenitisieren des Kolbenrings oberhalb seiner Ac3-Temperatur;
f. Abschrecken des Kolbenrings in einem geeigneten Abschreckmedium; und
g. Anlassen des Kolbenrings bei einer Temperatur im Bereich von 400 bis 700°C in einem Schutzgasofen.

6. Kolbenring, herstellbar nach einem Verfahren gemäß einem der Ansprüche 1 bis 5.

## Claims

1. A method of producing a piston ring comprising the following steps:
a. Production of a melt of the base materials of a cast iron or cast steel material,
b. Addition of ceramic particles to the melt, wherein the ceramic particles exhibit a smaller density than the melt; and
c. Pouring of the melt into a prefabricated mould, wherein the mould only allows the casting of a ring;
**characterized in**
d. Cooling of the melt, wherein a cooling velocity is maintained, so that a period ≥ 120 seconds elapses before the liquidus temperature is reached and wherein the mould is aligned horizontally, in order to facilitate a separation by means of gravitational force, so that the ceramic particles gather on at least one of the piston ring shoulders during cooling.

2. The method according to claim 1, **characterized in that** the ceramic particles exhibit a density < 4.0 g/cm³.

3. The method according to one of the claims 1 or 2, **characterized in that** the ceramic particles are selected from the group comprising particles of Al₂O₃, Cr₂O₃, Fe₃O₄, TiO₂, ZrO₂ and mixtures thereof.

4. The method according to one of the claims 1 to 3, **characterized in that** the ceramic particles exhibit a mean diameter of 0.1 to 100 µm.

5. The method according to one of the claims 1 to 4, further comprising the following steps:
e. Austenitization of the piston ring above its Ac3 temperature,
f. Quenching of the piston ring in a suitable quenching medium and
g. Relieving of the piston ring at a temperature within the range 400 to 700 °C in a controlled atmosphere furnace.

6. A piston ring that can be produced using a method according to one of the claims 1 to 5.

## Revendications

1. Procédé de production d'un segment de piston, comportant les étapes suivantes :
a. préparation d'une masse fondue des matières de départ d'un matériau en fonte ou en acier coulé ;
b. ajout à la masse fondue de particules de céramique, les particules de céramique faisant preuve d'une densité inférieure à celle de la masse fondue : et
c. moulage de la masse fondue dans un moule préfabriqué, le moule admettant exclusivement le coulage d'un segment ;
**caractérisé par**
d. le refroidissement de la masse fondue, une vitesse de refroidissement étant respectée, de sorte qu'une période de ≥ 120 secondes s'écoule jusqu'à l'atteinte du liquidus et le moule étant orienté à l'horizontale pour permettre une séparation au moyen de l'attraction terrestre, de sorte que pendant le refroidissement, les particules de céramique se rassemblent sur au moins un flanc du segment de piston.

2. Procédé selon la revendication 1, **caractérisé en ce que** les particules de céramique présentent une densité de < 4,0 g/cm³.

3. Procédé selon l'une quelconque des revendications 1 ou 2, **caractérisé en ce que** les particules de céramique sont choisies dans le groupe constitué de particules d'al₂O₃, de Cr₂O₃, de Fe₃O₄, de TiO₂ZrO₂ et de mélanges de ces derniers.

4. Procédé selon l'une quelconque des revendications 1 à 3, **caractérisé en ce que** les particules de céramique présentent un diamètre moyen de 0,1 à 100 *µ*m.

5. Procédé selon l'une quelconque des revendications 1 à 4, comprenant les étapes suivantes :
e. austénitisation du segment de piston au-delà de sa température Ac3 ;
f. trempe du segment de piston dans un agent de trempe adapté ; et
g. revenu du segment de piston à une température de l'ordre de 400 à 700 °C, dans un four à atmosphère contrôlée.

6. Segment de piston susceptible d'être produit d'après un procédé selon l'une quelconque des revendications 1 à 5.
